# EUROPEAN PATENT SPECIFICATION

(11) **EP 2 129 991 B1**
(45) Date of publication and mention of the grant of the patent: **08.05.2013**
(21) Application number: 08726874.4
(22) Date of filing: 14.03.2008
(51) Int. Cl.: F41H 1/02, F41J 5/04, G01L 5/00, G01L 1/14

(54) **IMPACT SENSORS AND SYSTEMS INCLUDING IMPACT SENSORS**
AUFPRALLSENSOREN UND AUFPRALLSENSOREN ENTHALTENDE SYSTEME
CAPTEURS D'IMPACT ET SYSTÈMES COMPRENANT DES CAPTEURS D'IMPACT

(30) Priority: 22.03.2007 US 919370 P
(43) Date of publication of application: 09.12.2009
(73) Proprietor: Protective Products Enterprises, Inc., Sunrise, FL 33323 (US)
(72) Inventor: BECK, Eric, J., Valencia, PA 16059 (US); FRANK, Peter, A., London NW2 4DT (GB); GILES, Terry, G., Purley, Surrey CR8 4NG (GB); HENDRICKSON, James, A., Freedom, PA 15042 (US)
(74) Representative: Macpherson, Craig Stuart
(86) International application number: PCT/US2008/003464
(87) International publication number: WO 2008/118296

(56) References cited:
- WO-A-2006/040781
- WO-A-2008/069682
- US-A- 5 195 752
- US-B1- 6 308 578
- US-B1- 6 349 201

## Description

### Background Of The Invention

The present invention relates generally to impact sensors and systems including such impact sensors and, particularly, to impact sensors and systems for use by personnel (such a law enforcement personnel, military personnel and the like) under conditions of potentially life-threatening impacts.

Ballistic resistant armor is used in many applications including, for example, protection of vehicles and persons from impacts from ballistic and other threats. Body armor to be worn on a person for protection from, for example, ballistic, knife, stab, spike and other threats, has been available for several decades. In general, body armor protects vital parts of the human torso against penetration and severe blunt trauma as, for example, generated by ballistic projectiles. Monolithic and multi-component ceramic plates have been used in a number of hard body armors (that is, body armors including hard projectile resistant components or plates). See, for example, U.S. Patent No. 6,253,655 and Canadian Patent No. 2,404,739. Improved hard body armor systems are disclosed in U.S. Patent No. 7,284,470. Relatively soft or pliant body armor, providing increased comfort for the user, often includes ballistic panels or packages formed, for example, from DuPont's KEVLAR^{®}ballistic grade fibers/fabrics. Improved soft body armor systems are disclosed in U.S. Patent Application Serial No. 11/405,221, filed April 17, 2006, and assigned to the assignee of the present invention.

Although both hard and soft body armor are quite effective in preventing penetration by ballistic threats, it would be desirable to provide an alarm to, for example, notify a command post or base in the case of a ballistic or other severe impact. In that regard, injuries to individuals equipped with body armor can and do occur, requiring that assistance be provided to such individual. Moreover, even absent an injury, an impact indicates that the individual is likely to be in need of immediate assistance.

Outside of the field of body armor, there have been a number of attempts to provide systems that sense when a wearer has been impacted by an object. For example, wearable piezoelectric force sensors have been used to detect the amount of force delivered to a competitor's body in martial arts competitions. See, for example, Chi, E.H., Introducing Wearable Force Sensors in Martial Arts, Pervasive Computing, IEEE CS (July-September 2005). In such systems, a body protector worn by a competitor is provided with such force sensors. Upon sensing an impact, a wireless transmitter sends a signal of the sensed impact to a judge's computer that scores and displays points.

Wearable force sensing systems have also been developed for use in the field of wearable computing. For example, ELEKTEX fabrics available form Eleksen Inc. of Waltham, Massachusetts have been used to form wearable, wireless fabric keyboards and controllers. The fabric operates by detecting changes in conductivity across an intricate web of conducting fibers through which current flow is maintained. A processor operating specialized software monitors the fabric, determining where deformations occur when the fabric is pressed.
US 6,308,578 discloses a device for detecting application of a force. The device has a first layer of electrically conductive material, and a first conductor electrically coupled to the first layer. The device also has a second layer of electrically conductive material, and a second conductor electrically coupled to the second layer. An electrical power supply is connected to the first conductor, and a transmitter is connected to the second conductor. The transmitter is capable of transmitting a signal when an electric charge moves from the first layer to the second layer. A resiliently compressible third layer of non-electrically-conductive porous material is disposed between the first layer and the second layer, and separates the first layer and the second layer a sufficient distance to prevent an electric charge from moving between the first and second layers, except when one of the conductive layers receives an impact.
US 6,349,201 discloses a garment having at least one layer providing bullet-proof protection for the wearer. One or more additional layers incorporate sensors to detect the magnitude of an impact to generate a signal activating a wireless transmitter to send distress signals and/or positional and other information to a remote base location. Additional sensors may be provided to indicate physical characteristics of the wearer.

Many currently available force sensor systems have power consumption requirements that make the sensor systems unsuitable for use in connection with mobile personnel, such as personnel equipped with body armor. Other types of force sensor systems are not suitably robust to provide reliable sensitivity in the case of, for example, a ballistic impact.

Thus, although wearable force and impact sensors have been developed in a number of fields, it remains desirable to develop a sensor system suitable for use by personnel under conditions of potentially life-threatening impacts, and particularly, by personnel equipped with body armor systems.

### Summary Of The Invention

The invention relates to a body armor system according to claim 1. In one aspect, the present invention provides an impact sensor system including at least one impact sensor including at least a first conductive layer, at least a second conductive layer, and at least one insulating layer between the first conductive layer and the second conductive layer. The insulating layer maintains the first conductive layer and the second conductive layer in spaced, non-contacting relation. The first conducting layer and the insulating layer are deformable upon an impact (for example, an impact of a predefined nature such as of a predetermined force etc.) to the first conducting layer such that the separation between the first conducting layer and the second conducting layer decreases upon the impact. The impact sensor system also includes circuitry in connection with the impact sensor to measure a change in at least one electrical property of the impact sensor resulting from the decrease in the separation between the first conducting layer and the second conducting layer.

In one embodiment, at least a portion of the first conductive layer contacts the second conductive layer upon the impact. In such an embodiment, the impact sensor can operate in the manner of a switch and current flows through at least a portion of the circuitry only upon contact between the first conducting layer and the second conducting layer. In another embodiment, the circuitry measures a change in capacitance of the impact sensor resulting from the decrease in the separation between the first conducting layer and the second conducting layer.

The impact sensor system can further include at least a second insulating layer and at least a third conductive layer. The second insulating layer can be positioned between the third conductive layer and the second conductive layer. The second insulating layer maintains the third conductive layer and the second conductive layer in spaced, non-contacting relation. The second conducting layer and the second insulating layer are deformable upon an impact (for example, of a predefined nature) to the second conducting layer such that the separation between the second conducting layer and the third conducting layer decreases upon the impact. The circuitry can further be adapted to measure a change in at least one electrical property of the impact sensor resulting from the decrease in the separation between the second conducting layer and the third conducting layer.

In another embodiment, at least a portion of the second conductive layer contacts the third conductive layer upon the impact. In such an embodiment, the impact sensor can operate in the manner of a switch and current flows through at least a portion of the circuitry only upon contact between the second conducting layer and the third conducting layer. In another embodiment, the circuitry measures a change in capacitance of the impact sensor resulting from the decrease in the separation between the second conducting layer and the third conducting layer.

The impact sensor system can include a plurality of impact sensors positioned, for example, in a grid.

Insulating layers of the impact sensors of the present invention can, for example, have a thickness of less than 1 mm. Conducting layers separated by such insulating layers (for example, the first conducting layer and the second conducting layer) can, for example, have a thickness in the range of approximately 20 µm to approximately 1000 µm.

In another aspect, the present invention provides a system for detecting an impact to a person wearing the system, including an impact sensor as described above, at least one control system to monitor the impact sensor system and determine if an impact has occurred, and at least one communication system in operative connection with the control system. The communication system can, for example, be adapted to transmit a signal upon determination of an impact by the control system.

The control system can, for example, include a microprocessor. The communication system can, for example, include a cellular phone or radio module. The system can further include a recording system in operative connection with the control system. The recording system can, for example, be adapted to record environmental sounds upon determination of an impact by the control system.

The system can further include an actuator adapted to communicate an alarm via the communication system upon manual activation by the person.

The impact sensor can, for example, be adapted to sense penetration of the sensor by a projectile.

In several embodiments, the communication system includes a communication unit in connection with the control system. The communication unit includes a wireless transmitter to communicate with at least one other component of the communication system positioned remote from the communication unit. The communication system can, for example, further include a cellular phone or radio module positioned remote from the communication unit and including a wireless receiver to communicate with the communication unit.

In still a further aspect, the body armor system can further include at least one control system to monitor the impact sensor to determine if an impact has occurred. The body armor system can also further include a communication system in operative connection with the control system as described above.

In several embodiments of the present invention, a communication port can be provided in communicative connection with the control system which is adapted to be connected to a computer to enable entry of control data. Further an indicator such as an audio source (for example, a speaker) can be provided in operative connection with the control system to provide an alarm (for example, an audible alarm) upon determination of an impact by the control system or upon manual activation.

The present invention, along with the attributes and attendant advantages thereof, will best be appreciated and understood in view of the following detailed description taken in conjunction with the accompanying drawings.

### Brief Description Of The Drawings

Figure IA illustrates an embodiment of a system of the present invention in which an impact sensor of the system is illustrated in cross section.

Figure IB illustrates an embodiment of body armor system of the present invention in the form of a body armor vest (for example, a ballistic resistant vest, a stab resistant vest and/or a spike resistant vest) wherein a communication system of the system is remote from several other components of the impact sensor of the system.

Figure 2 illustrates an embodiment of a impact sensor such as described in Figure 1 after a non-piercing impact.

Figure 3A illustrates the impact sensor of Figure 1 after penetration or piercing by an object such as a bullet.

Figure 3B illustrates a screen capture of a graphical representation of a measured voltage (v) as a function of time in a circuit including the impact sensor of the present invention operating as a switch.

Figure 4 illustrates an embodiment of a multilayer impact sensor of the present invention.

Figure 5 illustrates an embodiment of a multi-sectional impact sensor of the present invention for localizing the point of an impact.

Figure 6 illustrates a perspective view of a portion or section of an impact sensor of the present invention.

Figure 7 illustrates a screen capture of a setup page associated with control software for use in connection with the impact sensors of the present invention.

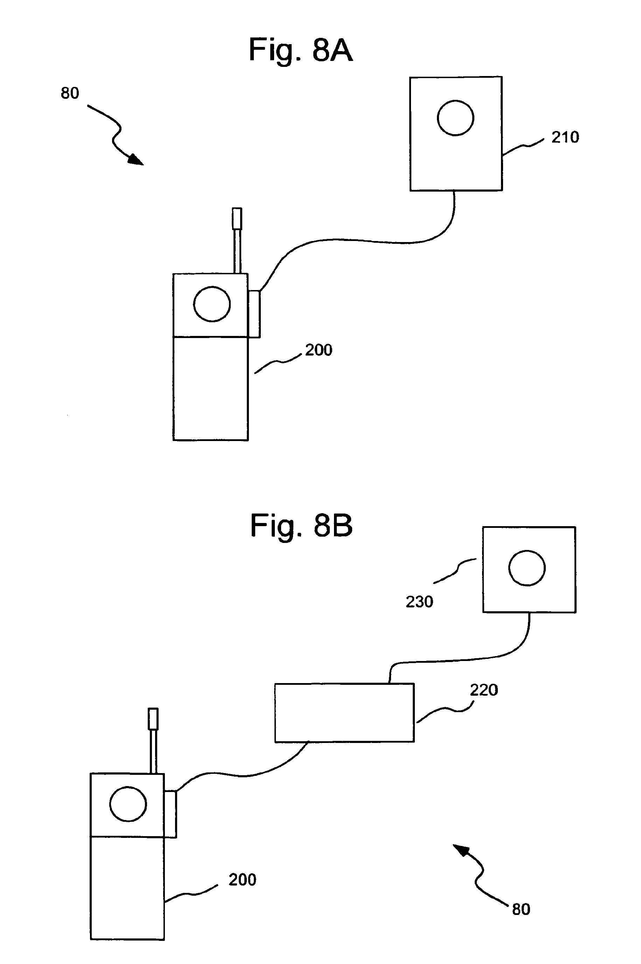

Figure 8A illustrates one embodiment of a communications system using a radio.

Figure 8B illustrates another embodiment of a communications system using a radio.

### Detailed Description Of The Invention

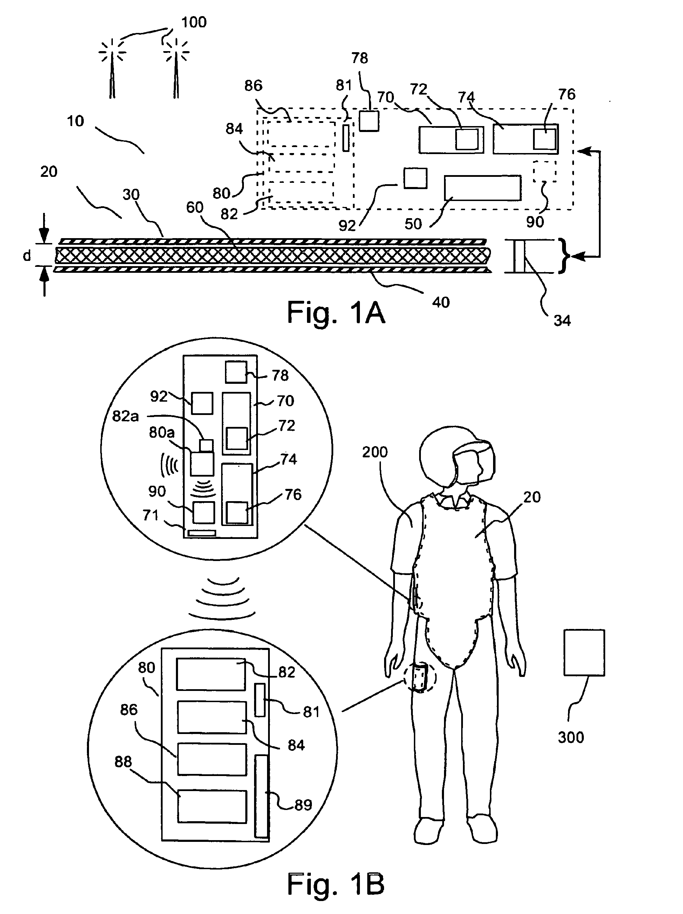

In several embodiments of the present invention, an impact sensor in, for example, the form of an open circuit, switch or capacitor provides efficient power consumption characteristics, suitable sensitivity and suitable robustness for use in connection with personnel (for example, law enforcement personnel, tactical squad personnel, SWAT personnel, military personnel etc.) under conditions of potentially life-threatening impacts. In that regard one embodiment of a system 10 of the present invention as illustrated in Figure 1A includes an impact sensor 20 including a first conductive layer 30 and a second conductive layer 40. In the illustrated embodiment, first conductive layer 30 is the outer layer with respect to the wearer's body. First conductive layer 30 and second conductive layer 40 are maintained in spaced, non-contacting relation to each other (represented, for example, by separation "d" in Figure 1A) until an impact (for example, of a predetermined level of force) occurs. Upon impact of an object with first conductive layer 30, at least a portion of first conductive layer 30 deforms toward second conductive layer 40. Such deformation of sensor 20 results in a measurable change in at least one electrical property (for example, resistance, capacitance etc.) of sensor 20. A voltage difference can, for example, be maintained across first conductive layer 30 and second conductive layer 40 via, for example, a power source such as a battery 50. Once first conductive layer 30 deforms sufficiently to contact second conductive layer 40, a closed circuit is formed or the resistance is reduced as compared to the open circuit state and a measurable current results. In general, no current flows through sensor 20 before an impact of sufficient force occurs to bring first conductive layer 30 into contact with second conductive layer 40. Thus, the power requirement of sensor 20 are relatively low (indeed, zero before an impact) and the life of battery 50 can cover an extended period of time. Further, a measurable change in capacitance results as an impact begins to deform sensor 20, decreasing the thickness of the insulating layer 60 in the area of the impact.

In several embodiments of the present invention, first conductive layer 30 and second conductive layer 40 are maintained in spaced, non-contacting relation to each other via a deformable insulating layer 60 (that is, a layer of an insulating, nonconductive material) positioned between first conductive layer 30 and second conductive layer 40. Insulating layer 60 prevents contact of first conductive layer 30 with second conductive layer 40 under normal (nonimpact) conditions, thereby maintaining sensor 20 in the state of an open switch. Upon impact of a suitable force, insulating layer 60 deforms to, for example, allow contact of deforming first conductive layer 30 with second conductive layer 40.

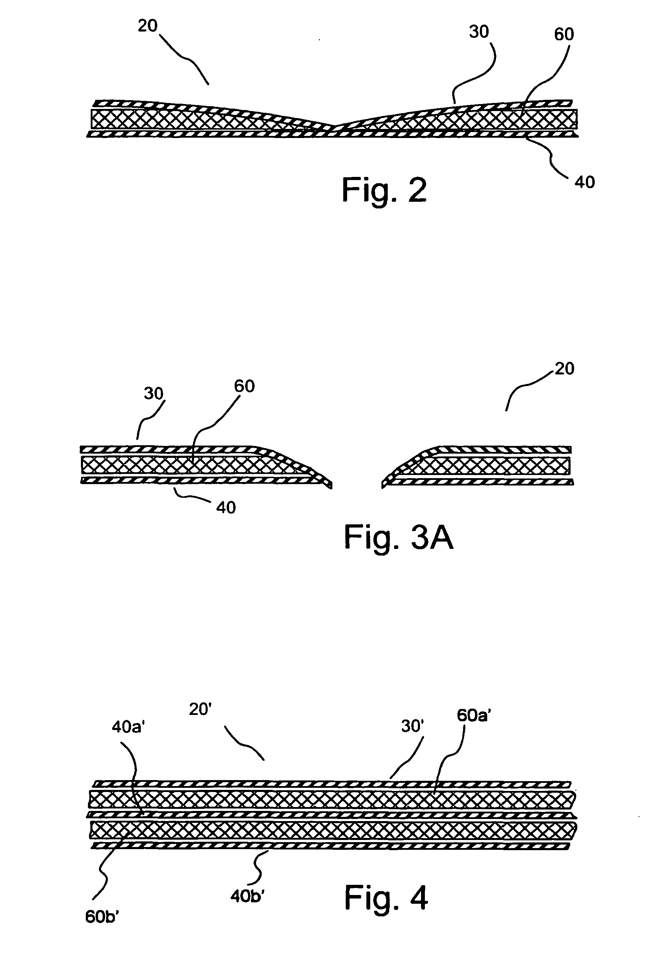

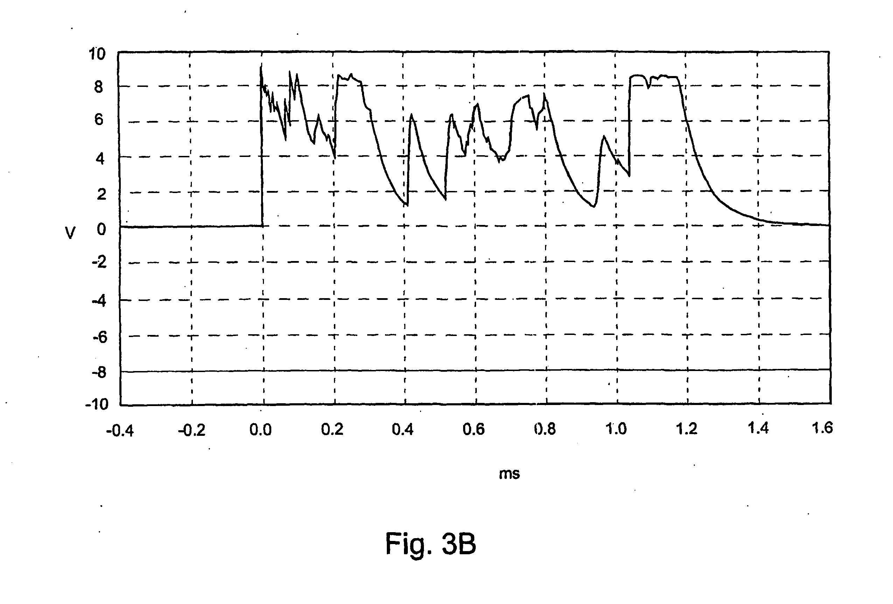

Figure 2 illustrates the effect of an impact of an object upon first conductive layer 30 of sensor 20 and the resultant deformation of first contact layer 30 (and insulating layer 60) to locally decrease the separation between first contact layer 30 and second conductive layer 40 (to, for example, cause first contact layer 30 to come into contact with second contact layer 40). Figure 3A illustrates the effect of an impact of a piercing or penetrating object such a bullet, blade, spike or knife upon sensor 20. Without limitation to any particular mechanism of operation, it is believed that the portions of first conductive layer 30 around the periphery of the resulting hole in sensor 20 are brought into contact with second conductive layer 40, thereby closing the circuit in which sensor 20 is in electrical connection to function, for example, in a manner similar to a switch. A graphical representation of a resultant measured voltage in that circuit is, for example, set forth in Figure 3B. At time 0.0, the penetrating impact occurs, closing the circuit, and causing current to flow through the circuit. A change in current or voltage of more than a predefined threshold can be determined to be an impact event.

Various materials can be used in conductive layers 30 and 40. For example, such materials can include flexible metallic sheets. Conductive woven fabrics (for example, metallic woven fabrics or metal-plated woven fabrics), conductive carbon materials, polymer/metal composite materials and conductive polymeric materials can also be used. Various insulating materials are also suitable for use in insulating layer 60. For example, various insulating woven fabrics, insulating gels, insulating polymeric materials (including, but not limited to, open-celled foams, polymeric sheets or films, resilient polymeric beads, polymeric fabrics and other polymeric materials) and/or other insulating materials can be used. As clear to one skilled in the art, the amount of force required to cause senor 20 to indicate an impact can be readily predetermined by choice of an insulating material of appropriate physical characteristics. In that regard, the thickness and deformability of insulating layer 60 determine the amount of impact force required to provide a sensed impact event such as illustrated in Figures 2 and 3A. In general, insulating layer 60 is preferably maintained relatively thin or minimized in thickness so that the separation between first conductive layer 30 and second conductive layer 40 is maintained relatively small, providing for improved impact sensitivity. For example, insulating layer 60 can have a thickness of less that approximately 1 mm, less than approximately 0.5 mm and even less than approximately 0.25 mm. Conductive layers 30 and 40 are preferably of sufficient thickness and malleability such that a positive result is obtained upon, for example, penetration of sensor 20 as illustrated in Figure 3A. For example, conductive layers 30 and/or 40 can have a thickness in the range of approximately 20 µm to approximately 1000 µm, or in the range of approximately 20 µm to approximately 500 µm.

In several studies of the present invention, sensor 20 included conductive layers 30 and 40 formed from sheets of aluminum separated by a plastic. In several, other studies of the present invention a commercially available, double-sided copper printed circuit board (PCB) material was used as sensor 20. The flexible PCB material was purchased from Cross and Bradley Ltd of the United Kingdom under part no. PCL3-17/25-FR, wherein the copper outer layers were 17 µm thick and the intermediated insulating layer was 25 µm thick. In still other studies, conductive fabric (fabric woven from metal- (for example, Ni, Cu, Ag, etc.) plated polyethylene terephthalate (PET) fibers) available from Anjinelectron of Korea was used as the conductive outer layers and a thin layer of an insulating polymeric film was used as the insulating layer. The results set forth in Figure 3B are for an impact sensor including such conductive fabric for conducting layers 30 and 40 with an insulating polymeric film therebetween for insulating layer 60. The conducting layers were adhered to the insulating layer. Double sided adhesive tape or other adhesive materials as known in the art can be used to attach the various layers of the impact sensors of the present invention. Stitching is preferably avoided as stitching can result in forming conductive contact between the conducting layers.

Figure 4 illustrates an embodiment of a multilayer sensor 20' of the present invention which includes a first conductive layer 30', a second conductive layer 40a' and a third conductive layer 40b'. A first insulating layer 60a' separates first conductive layer 30' and second conductive layer 40a'. A second insulating layer 60b' separates second conductive layer 40a' and third conductive layer 40b'. Providing sensors having multiple layers or layered switches can, for example, provide redundancy for improved reliability. Moreover, differences in insulating layer thicknesses and composition can provide for different sensed states as a result of different impact forces, thereby enabling identification or differentiation of the nature/force of different impacts. Upon application of the force of an impact to the outer layers of such a multilayer sensor, deformation of the outer layers translates the force/impact to inner layers of the sensor causing deformation thereof as described above. Each set or pair of conducting layers separated by an insulating layer can, for example, be in electrical connection with a circuit as described above to measure any change in electrical properties associated with an impact to the sensor.

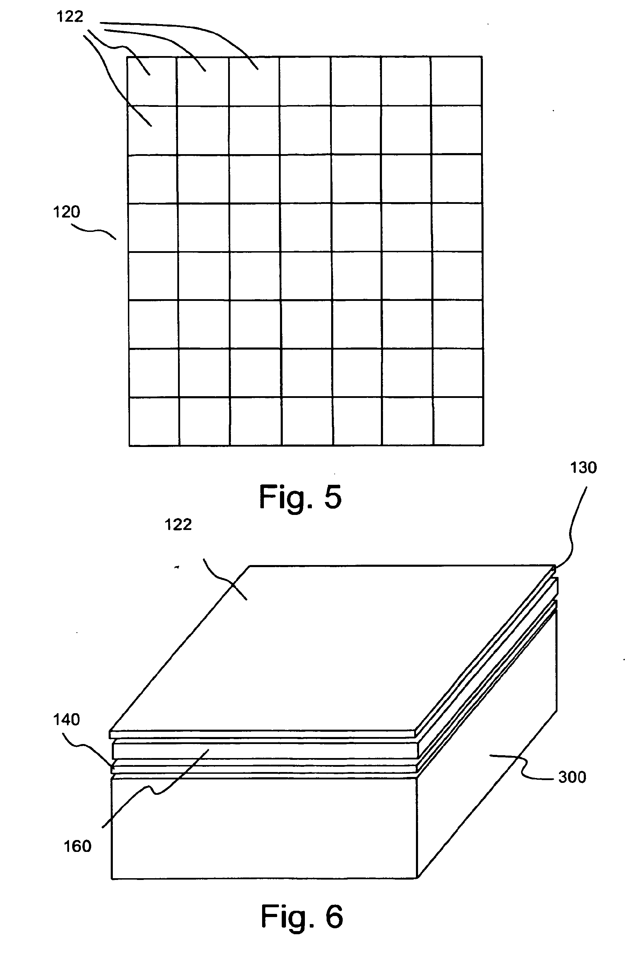

As illustrated, for example, in Figure 5, a sensor 120 of the present invention can be divided into a plurality of sections 122 that are electrically separated. Providing such a grid system can enable a determination of the position on a wearers body at which an impact has occurred. Figure 6 illustrates one of sections 122 overlain upon a section of a hard or soft ballistic armor system 200 as described, for example, in U.S. Patent No. 6,253,655 and/or in U.S. Patent Application Serial No. 11/405,221. As discussed above in connection with, for example, sensor 20, each of sections 122 of sensor 120 includes a first conductive layer 130 separated from a second conductive layer 140 by an intermediate insulating layer 160.

Impact sensors for use in connection with body armor systems of the present invention can operate in a manner other than or take forms other than the open circuits or switches described above. In that regard, in several embodiments a change in capacitance can be measured. Such impact sensors can have a structure similar to the impact sensor 40 of Figure 1A. However, instead of monitoring for a short circuit or reduction in resistance from an essentially open circuit to a resistive value of, for example, a few kilohms (for example, resulting from contact between the conductive layers) as described above, one can monitor for a sudden change in capacitance as would occur when an impact begins to deform the impact sensor and make the insulated thickness locally thinner. A change in separation "d" between the conductive layers, increases the capacitance momentarily. The change in capacitance can, for example, be detected using an oscillator that uses the capacitance value as part of a frequency generating circuit. In such a system, one would detect a sudden change in frequency.

Alternatively, an impact sensor of the present invention can include material that generates a voltage upon an impact. For example, a body armor system of the present invention can include an impact sensor which can include a piezoelectric material (for example, a polyvinylidene fluoride or PVDF piezo film) adjacent body armor. The piezoelectric film can be a single film or sheet (as opposed to a laminate) that simply generates a voltage spike when the film, sheet or other form of impact sensor is deformed or stressed. It is not required to maintain a voltage across the film or sheet. The voltage generated by deformation or stress of the impact sensor can be used to, for example, trigger electronics to "wake up" and send an alarm signal (as described further below) if the voltage is, for example, above a certain threshold associated with an impact of a predetermined nature.

Still further, an impact sensor can measure shock waves resulting from an impact. Such an impact sensor can, for example, include a gel layer (for example a foam material filled or impregnated with a gel). When an impact occurs, a shock wave travels through the material (similar to the ripples produced in a pool of water after dropping a pebble therein). The impact sensor includes a sensor that monitors for such a shock wave. The sensor can, for example, include a piezoelectric element that is deformed by the arrival of the shock wave. Alternatively, the sensor can include a microphone. A threshold can, for example, be set to create an alarm signal upon detection of an impact of a predetermined nature.

Returning to Figure 1A, system 10 of the present invention can also include a control system 70. Control system 70 can, for example include a processor 72 (for example, a microprocessor). Microprocessor 72 can, for example, include software to monitor the state of the circuit of which sensor 20 (or other impact sensor as described above) is a part, determining if a measured voltage/current or other measured signal is above a threshold or within a range associated with an impact event. System 10 can further include a sound recording system 74 (including, for example, a microphone 76 and recording memory (such as a removable microdisk or other digital storage media as known in the art). Upon determination of an impact event, recording system 74 can be activated such that the sounds/voices associated with the local environment are measured/recorded by microphone 76 for a period of time after the impact event.

System 10 can further include a communication system 80 in communicative connection therewith. Communication system 80 is preferably operable to transmit a signal of an impact event back to a command post or base (for example, to a police station or central control in the case of a police officer equipped with sensor 20). In one embodiment, existing cellular phone infrastructure, represented by antennae 100, is used to transmit messages/information. Communication system 80 can, for example, include a dual-tone, multi-frequency (DTMF) decoder system 82 to effect tone dialing, which is used by most public switched telephone networks (PSTN) for number dialing and is also used to provide for transfer of small amounts of data. A cell phone module 84 in communicative connection with an antenna 86 can also be provided. Wireless broadband internet services can also be used as such become more commonly available. Wireless Enhanced 911 (E911) services can also be used in the present invention.

In another embodiment, an existing standard radio carried by first responders and other emergency personnel is used to transmit messages 200 and information from impact sensor 20. Communications module 210 is connected to radio 200 via the radio's remote speaker/microphone jack. Communications utilizes the radio's power. Upon incident microphone feed to the radio and broadcasts a user defined distress call and user location to a predefined radio channel while continuously recording live feed for a predetermined amount of time. User programming could be made possible via the use of a USB connection. Alternatively, the electronics for the communications module may be contained as a separate unit 200 that would then be interconnected to the police radio 200 by the remote speaker/microphone jack. This unit would further have the ability to be connected to a remote speaker/microphone 230 of the user's choice.

System 10 can, for example, include a communication port 81 (for example, a USB port or a wireless communication module) for connection of system 10 to a personal computer operating, for example, a general purpose operating system such as MICROSOFT WINDOWS® to program certain aspects of system 10 as described below. Communication port 81 can, for example, be part of communication system 80.

In addition to transmissions to a command post or base, communication system 80 can also communicate with other communication systems 80 in the vicinity thereof or range thereof in the case of an impact or penetration (such as a gunshot). Such communication can, for example, be effected via, a communication unit 80a (such as a radio frequency transmitter/transceiver as described further below) and can provide additional assurance that an alarm message will be received and acted upon quickly. Communication unit 80a can, for example, send a signal that can be received by all like systems 10 in the range thereof.

In another embodiment, an existing standard radio carried by first responders and other emergency personnel is used to transmit messages 200 and information from impact sensor 20. Communications module 210 is connected to radio 200 via the radio's remote speaker/microphone jack. Communications module 200 utilizes the radio's power. Upon incident notification from sensor 20, the module 210 intermittently intercepts the microphone feed to the radio and broadcasts a user defined distress call and user location to a predefined radio channel while continuously recording live feed for a predetermined amount of time. User programming could be made possible via the use of a USB connection. Alternatively, the electronics for the communications module may be contained as a separate unit 220 that would then be interconnected to the police radio 200 by the remote speaker/microphone jack. This unit would further have the ability to be connected to a remote speaker/microphone 230 of the user's choice.

In several embodiments, communication system 80, or a portion thereof, as described above was remote from, but in wireless communication with, other electronics of system 10. As illustrated, for example, in Figure 1B, that portion of the electronic circuitry to monitor the state of the circuit of which sensor 20 (a perimeter which is shown in dashed lines within body armor 200 in Figure 1B) is a part can be in wired connection with sensor 20, which is associated with body armor 200 in the form of a vest. As use herein, the term "body armor" refers to resistant armor worn on the person of a user. Such body armor can be ballistic resistant, stab resistant and/or spike resistant as, for example, defined in the National Institute of Justice Ballistic Resistance of Person Body Armor NIJ Standard-0101.06 and in the National Institute of Justice Stab Resistance of Personal Body Armor NU Standard-0115.00 of the U.S. Department of Justice. In the case of an impact or puncture event (or in the case that other data is to be transmitted) a wireless signal can be sent, for example, via an RF transmitter/transceiver of communication unit 80a to "remote" communication system 80. Remote communication system 80 can, for example, be kept within a short distance from sensor 20. In the illustrated embodiment, communication system 80 is positioned within a pouch attached to the user's trouser leg. However, communication system 80 can, for example, be positioned anywhere associated with the user that is convenient to the user. Communication system 80 can for example be a standard radio unit carried by first responders and other emergency personnel. Alternatively, it can be a cell phone module.

Wireless communication unit 80a can, for example, operate similar to a vehicle key fob that communicates via radio frequency (RF) transmission to a vehicle (for example, a car). Such devices require very little power. Indeed, batteries used in such devices rarely if ever require changing. Each system 10 can have its own serial code or other unique identifier.

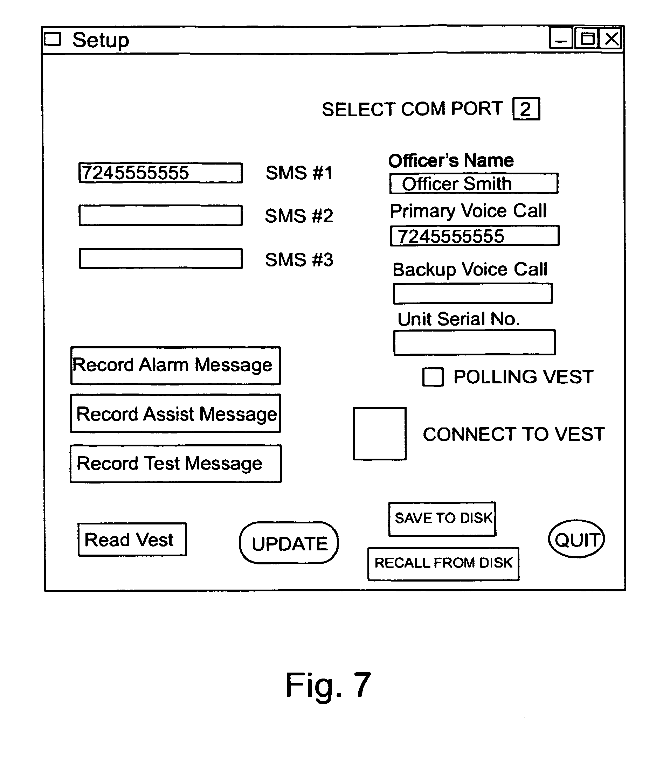

Communication system 80 can, for example, "learn" to which system 10 it is associated. In one embodiment, system 10 can be supplied with a label having a unique serial number thereon. When one or more systems 10 arrive at a destination (for example, a police station, a military post etc.) system 10 can be connected (for example, via USB cable via a wireless connection) to a computer and all the relevant data installed from the computer, including, for example, the system serial numbers, the telephone numbers for the text and voice messages, and pre-recorded voice messages (see Figure 7 and the discussion thereof below). The serial number for each system can, for example, be saved into a memory of cell phone module 84. Alternatively, information can be manually entered and/or transmitted via, for example, bar codes, RFID etc.

In another embodiment, a switch 82a was placed in communicative connection with communication unit 80a. When system 10 is shipped from the manufacturer, communication unit 80a in system 10 can, for example, be in a non-transmitting mode. This mode or state can, for example, assist in maintaining battery charge. Moreover, regulations may not permit air shipment if communication unit 80a of system 10 is in a transmitting mode. Upon arrival at its final destination, communication unit 80a can be activated by actuating switch 82a. In several embodiments, when communication system 80 is placed in communication (for example, via a USB connection) to a computer, and switch 82a is actuated (whether or not it has been previously actuated), communication unit 80a transmits a short burst of RF energy, providing the serial number and/or other information associated with system 10. This procedure makes bar coding or other labelling of the transmitted information by the manufacturer unnecessary and avoids the need for a corresponding bar code reader (or other sensor/reader system) at the customers site.

Positioning communication system 80 remote from the remainder of system 10 can, for example, provide a number of advantages. For example, communication system 80 can be relatively large in comparison to other components and it can be difficult to position communication system 80 on or within body armor 200 without causing inconvenience to the user. This is particularly the case if communications system 80 is a radio. Moreover, remote positioning of communication system 80 can simplify wiring and reliability of components associated with body armor 200. Furthermore, given the low power requirements of other components of system 10, battery 50 can, for example, be sealed and not be replaceable. Communication system 80 can include its own power source 88 (for example, a battery). Battery 88 can be a replaceable and/or rechargeable battery. Battery 88 can remain operable over an extended period (for example, in excess of one year). In several embodiments, communication system 80 senses when battery 88 is low in charge (using sensing systems as known in the art), and communicates a signal to, for example, a command or base station that battery 88 should be replaced.

System 10 can also include one or more subsystems to monitor the state of system 10. In one embodiment as illustrated in Figure 1A, a resistor 34 can be placed in electrical connection across two conductive layers 30 and 40, preferably away from the actual potential contact points for sensor 20. Resistor 34 facilitates an electronic check for short or open circuits in system 10. In that regard, periodically, power from battery 50 can be applied across conductive layers 30 and 40 to check that a current (preferably a very small current, as a result of using a resistor having a relatively high resistance) is flowing to indicate that the sensor circuit is not broken. Alternatively, a check can be made to determine if capacitance is in the right order of magnitude. A check of capacitance has the advantage of not imposing a continuing drain on battery 50. Such system checks also will provide an indication if there is a short circuit within system 10. While communication system 80 is in communication with system 10, a short circuit should also trigger an alarm as described above. Any problems detected in a periodic check of system 10 can be communicated to communication system 80 to advise the user and thereby provide a warning that system 10 associated with body armor/vest 200 may not be functioning properly.

In cases in which commercial cellular phone communications networks are used, text or voice charges can be avoided for system test transmissions by having communication system 80 call a predetermined or fixed telephone number and then hanging up before that number is answered. However, the receiving telephone can log or otherwise note the incoming number using systems and methods known in the communication arts.

In another embodiment, cell phone module 84 of communication system 80 can, for example, be programmed to call the predetermined telephone number and hang up as described above. Manual activation can also be made possible. The receiving phone system can, upon receipt of the call, call back the telephone number associated with communication system 80. Upon making a connection (for example, after a few rings) the calling phone can hang up. This receipt of the call signal by communication system 80 completes the test of system 10 and of communication system 80. Upon successful completion of such a test, an indication such as a green LED on cell phone module 84 of communication system 80 or other indication can be activated, thereby indicating that the test was completed successfully. If a problem had been detected, (for example, one or more broken contacts, battery 50 determined to be low, etc.) then cell phone module 84 of communication system 80 does not make the call to the predetermined telephone number (or calls and does not hang up), thereby providing an indication of a problem. Further , the successful test indicator (for example, a green LED on cell phone module 84) will not be activated and the user will know there is a problem.

In another embodiment, cell phone module 84 can be programmed to call a specific telephone number periodically (for example, every 24 hours). As described above, it can be programmed to (if there is no fault or problem) hang up after, for example, two rings. In this embodiment, the command or home base can be equipped with a phone system 300 (see Figure 1 B) adapted to receive the call from cell phone module 84, note its number and record the time of call. In the event that a call is not received within a suitable time limit, phone system 300 will highlight a possible malfunction and the command or home base will be able to make contact with the user to resolve the problem. If there has been a fault or problem to report, cell phone module 84 can, for example, be programmed to not hang up when it makes the call to phone system 300. Cell phone module 84 can, for example, wait several or more rings (for example, six rings) until phone system 300 answers and then report the detail of the fault. The details of the report can be logged by phone system 300 and highlighted for further action at the command or home base.

Alternatively, text and/or voice messaging available from commercial cellular phone services can be used in such self testing methodologies.

It is possible that sensor 20 can be inadvertently or accidentally impacted, penetrated or punctured. In several embodiments, an alarm procedure was initiated upon such an event as described above. Further, an indication or local alarm that is detectible by the user was also initiated. For example, an alarm such as an audible alarm via an audio source 78 (for example, a speaker) could be initiated. Further, communication unit 80 can be provided with a vibrating mechanism 89 (as known, in the cellular phone arts) that can, for example, vibrate every few seconds (for, example, every 15 seconds) to indicate to the user that an alarm call was in progress. In this manner, the user gains comfort knowing that an emergency call had been transmitted. Further, if the incident arose from a false alarm (for example, an inadvertent puncture of sensor 20), the user could call in to the command post or base to cancel the associated alarm, thereby avoiding a substantial backup and/or rescue operation.

In several studies of the present invention, the control system and communication system included an MC56 GSM Modem (US triband version) available from Siemens, a PIC micontroller (PIC16F6520), an ISD4001 sound recording chip, an MT88L70 DTMF tone decoder (Mitel Semiconductor), an SSM2167 Audio VOGAD (Voice Operated Gain Adjusting Device) (Analog Devices), a CP2102 USB interface (silicon laboratories), power regulators, an electret microphone, a dual band 800/1900 MHz antenna, and an SIM (Subscriber Identity Module) card and holder.

Any number of system operation and communication schemes can be used in the present invention. For example, in one embodiment, microphone 76 begins recording upon sensing of an impact event as described above. Upon establishing a communication link with a base, a text SOS message can be sent via, for example, short message service (SMS) available via cellular phone service to one or multiple recipients. A prerecorded voice message can also be sent to the base. Spoken identification of the system can facilitate operator understanding of an alarm without the need for or intervention of computers, databases etc. Likewise, a predetermined amount of the environmental recording initiated upon sensing the impact event can also be transmitted. After transmission of any recording or immediately upon forming a connection, microphone 76 can be used to transmit live sound/voice. Sound recording of the incident can, however, continue. Two-way communications can also be established via cell phone module 84. Cell phone module 84 can also be used to send information via the Internet or a wireless Internet connection can be made directly via, for example, processor 72 and attendant hardware as known in the art.

Cellular phone module 84 and radio 200 can also be used as a locator (using triangulation methods known in the art). Other location system such as GPS etc. can additionally or alternatively be used. An alarm can also be sounded via a audio source 78 to assist in locating the individual wearing sensor 20.

Various cell phone protocols including GSM, CDMA, GPRS, UMTS, PCS and others can be used in the present invention. GSM, for example, typically provides relatively fast connect times. It is used widely in Europe and is gaining in popularity in the United States.

Figure 7 illustrates an example of a graphical user interface for use with a computer in communicative connection with cellular phone module 84 for programming certain aspects of the operation of system 10. A user can, for example, use the user interface to enter the name of the wearer of, for example, a ballistic vest including the system of the present invention. A primary voice call telephone number and a backup voice telephone number to call, for example, upon an impact event can also be entered. Likewise, one or more (three, in the illustrated embodiment) telephone numbers for short message service text/data messages can be entered. As described above, a serial number for system 10 to associate communication system 80 with the remainder of system 10 can also be entered (or otherwise transmitted). Controls are also provided for initiating recording of an alarm message, an assist message and a test message. Upon entry of the desired data, an update button can be actuated to transmit the data to system 10 (via, for example, communication/data port 81). Such data can also be saved and recalled from a data disk or hard drive associated with the computer.

While the present invention has generally been described in connection with a communications system that includes a cellular phone, the communications in the present invention can additionally or alternatively be effected via a radio system and as is commonly carried by police and other emergency personnel. As illustrated in Figure IA, a module 90 can be provided to communicatively connect system 10 to a radio system such as a police radio system or to a secure radio system as used in military applications. A low power transmitter/transceiver such as radio frequency communication unit 80a of Figure IB can also be used as an intermediate communications link between system 10 and such a communication system.

In addition to establishing a communication link upon sensing of an impact event as described above, a silent alarm/communication link can also be established manually via a manual actuator 92 to send a silent alarm should the individual equipped with system 10 be in need of assistance.

## Claims

1. A body armor system (10) to be worn by a person, comprising:
at least one section of body armor (200); and
at least one impact sensor (20, 20') associated with at least a portion of the body armor (200), the impact sensor (20, 20') comprising:
at least one first conductive layer (30, 30');
at least one second conductive layer (40, 40a'); and
at least one insulating layer (60, 60a') between the first conductive layer (30, 30') and the second conductive layer (40, 40a'), the insulating layer (60, 60a') maintaining the first conductive layer (30, 30') and the second conductive layer (40, 40a') in spaced, non-contacting relation, the first conducting layer (30, 30') and the insulating layer (60, 60a') being deformable upon an impact to the first conducting layer (30, 30') such that the separation between the first conducting layer (30, 30') and the second conducting layer (40, 40a') decreases upon the impact;
**characterized in that** the body armor system (10) further comprises:
a circuitry in connection with the impact sensor (20, 20') to measure a change in at least one electrical property of the impact sensor (20, 20') resulting from the decrease in the separation between the first conducting layer (30, 30') and the second conducting layer (40, 40a').

2. A body armor system (10) according to claim 1, wherein at least a portion of the first conductive layer (30, 30') contacts the second conductive layer (40, 40a') upon the impact, and wherein current flows through at least a portion of the circuitry only upon contact between the first conducting layer (30, 30') and the second conducting layer (40, 40a').

3. A body armor system (10) according to claim 1, wherein the circuitry measures a change in capacitance of the impact sensor (20, 20') resulting from the decrease in the separation between the first conducting layer (30, 30') and the second conducting layer (40, 40a').

4. A body armor system (10) according to any preceding claim, wherein the impact sensor (20, 20') further comprises at least a second insulating layer (60b') and at least a third conductive layer (40b'), the second insulating layer (60b') being positioned between the third conductive layer (40b') and the second conductive layer (40a'), the second insulating layer (60b') maintaining the third conductive layer (40b') and the second conductive layer (40a') in spaced, non-contacting relation, the second conducting layer (40a') and the second insulating (60b') layer being deformable upon an impact to the impact sensor (20, 20') such that the separation between the second conducting layer (40a') and the third conducting layer (40b') decreases upon the impact; the circuitry further being adapted to measure a change in at least one electrical property of the impact sensor (20, 20') resulting from the decrease in the separation between the second conducting layer (40a') and the third conducting layer (40b').

5. A body armor system (10) according to any preceding claim, comprising a plurality of impact sensors (20, 20') positioned in a grid.

6. A body armor system (10) according to any preceding claim, comprising:
at least one control system (70) to monitor the impact sensor and determine if an impact has occurred; and
at least one communication system (80) in operative connection with the control system (70), the communication system (80) comprising a communication port in communicative connection with the control system which is adapted to be connected to a computer to enable entry of control data.

7. A body armor system (10) according to claim 6, wherein the control system (70) comprises a microprocessor (72).

8. A body armor system (10) according to claim 6 or claim 7, wherein the communication system (80) comprises a communication unit (80a) in connection with the control system (70), the communication unit (80a) comprising a wireless transmitter to communicate with at least one other component of the communication system positioned remote from the communication unit (80a).

9. A body armor system (10) according to claim 8, wherein the communication system (80) includes a cellular phone or radio module positioned remote from the communication unit and including a wireless receiver to communicate with the communication unit.

10. A body armor system (10) according to any one of claims 6-9, further comprising a communication port in communicative connection with the control system (70), wherein the communication port is adapted to be connected to a computer to enable entry of control data.

11. A body armor system (10) according to claim 10, further comprising an indicator in operative connection with the control system (70) to provide an alarm upon determination of an impact by the control system (70) or upon manual activation.

## Patentansprüche

1. Körperpanzerungssystem (10), das von einer Person getragen werden soll, umfassend:
mindestens einen Körperpanzerungsteil (200); und
mindestens einen mit mindestens einem Abschnitt der Körperpanzerung (200) assoziierten Aufprallsensor (20, 20'), wobei der Aufprallsensor (20, 20') Folgendes umfasst:
mindestens eine erste leitfähige Schicht (30, 30');
mindestens eine zweite leitfähige Schicht (40, 40a'); und
mindestens eine Isolierschicht (60, 60a') zwischen der ersten leitfähigen Schicht (30, 30') und der zweiten leitfähigen Schicht (40, 40a'), wobei die Isolierschicht (60, 60a') die erste leitfähige Schicht (30, 30') und die zweite leitfähige Schicht (40, 40a') in beabstandeter, nicht kontaktierender Beziehung hält, wobei die erste leitfähige Schicht (30, 30') und die Isolierschicht (60, 60a') bei einem Aufprall auf die erste leitfähige Schicht (30, 30') verformbar sind, so dass die Trennung zwischen der ersten leitfähigen Schicht (30, 30') und der zweiten leitfähigen Schicht (40, 40a') bei dem Aufprall abnimmt;
**dadurch gekennzeichnet, dass** das Körperpanzerungssystem (10) weiter Folgendes umfasst:
eine Schaltung in Verbindung mit dem Aufprallsensor (20, 20') zum Messen einer Änderung mindestens einer elektrischen Eigenschaft des Aufprallsensors (20, 20'), die aus der Abnahme der Trennung zwischen der ersten leitfähigen Schicht (30, 30') und der zweiten leitfähigen Schicht (40, 40a') resultiert.

2. Körperpanzerungssystem (10) nach Anspruch 1, wobei bei dem Aufprall mindestens ein Abschnitt der ersten leitfähigen Schicht (30, 30') die zweite leitfähige Schicht (40, 40a') kontaktiert und wobei nur bei Kontakt zwischen der ersten leitfähigen Schicht (30, 30') und der zweiten leitfähigen Schicht (40, 40a') Strom durch mindestens einen Abschnitt der Schaltung fließt.

3. Körperpanzerungssystem (10) nach Anspruch 1, wobei die Schaltung eine Änderung der Kapazität des Aufprallsensors (20, 20') misst, die aus der Abnahme der Trennung zwischen der ersten leitfähigen Schicht (30, 30') und der zweiten leitfähigen Schicht (40, 40a') resultiert.

4. Körperpanzerungssystem (10) nach einem der vorangehenden Ansprüche, wobei der Aufprallsensor (20, 20') weiter mindestens eine zweite Isolierschicht (60b') und mindestens eine dritte leitfähige Schicht (40b') umfasst, wobei die zweite Isolierschicht (60b') zwischen der dritten leitfähigen Schicht (40b') und der zweiten leitfähigen Schicht (40a') positioniert ist, wobei die zweite Isolierschicht (60b') die dritte leitfähige Schicht (40b') und die zweite leitfähige Schicht (40a') in beabstandeter, nicht kontaktierender Beziehung hält, wobei die zweite leitfähige Schicht (40a') und die zweite Isolierschicht (60b') bei einem Aufprall auf den Aufprallsensor (20, 20') verformbar sind, so dass die Trennung zwischen der zweiten leitfähigen Schicht (40a') und der dritten leitfähigen Schicht (40b') bei dem Aufprall abnimmt; wobei die Schaltung weiter dazu angepasst ist, eine Änderung mindestens einer elektrischen Eigenschaft des Aufprallsensors (20, 20') zu messen, die aus der Abnahme der Trennung zwischen der zweiten leitfähigen Schicht (40a') und der dritten leitfähigen Schicht (40b') resultiert.

5. Körperpanzerungssystem (10) nach einem der vorangehenden Ansprüche, umfassend mehrere in einem Raster positionierte Aufprallsensoren (20, 20').

6. Körperpanzerungssystem (10) nach einem der vorangehenden Ansprüche, umfassend:
mindestens ein Steuerungssystem (70) zum Überwachen des Aufprallsensors und Bestimmen, ob ein Aufprall stattgefunden hat; und
mindestens ein Kommunikationssystem (80) in wirksamer Verbindung mit dem Steuerungssystem (70), wobei das Kommunikationssystem (80) einen Kommunikationsanschluss in kommunizierender Verbindung mit dem Steuerungssystem umfasst, der dazu angepasst ist, mit einem Computer verbunden zu werden, um die Eingabe von Steuerungsdaten zu ermöglichen.

7. Körperpanzerungssystem (10) nach Anspruch 6, wobei das Steuerungssystem (70) einen Mikroprozessor (72) umfasst.

8. Körperpanzerungssystem (10) nach Anspruch 6 oder Anspruch 7, wobei das Kommunikationssystem (80) eine Kommunikationseinheit (80a) in Verbindung mit dem Steuerungssystem (70) umfasst, wobei die Kommunikationseinheit (80a) einen Drahtlossender umfasst, um mit mindestens einer weiteren Komponente des Kommunikationssystems zu kommunizieren, die entfernt von der Kommunikationseinheit (80a) positioniert ist.

9. Körperpanzerungssystem (10) nach Anspruch 8, wobei das Kommunikationssystem (80) ein Zellulartelefon oder Funkmodul umfasst, das entfernt von der Kommunikationseinheit positioniert ist und einen Drahtlosempfänger umfasst, um mit der Kommunikationseinheit zu kommunizieren.

10. Körperpanzerungssystem (10) nach einem der Ansprüche 6-9, weiter umfassend einen Kommunikationsanschluss in kommunizierender Verbindung mit dem Steuerungssystem (70), wobei der Kommunikationsanschluss dazu angepasst ist, mit einem Computer verbunden zu werden, um die Eingabe von Steuerungsdaten zu ermöglichen.

11. Körperpanzerungssystem (10) nach Anspruch 10, weiter umfassend eine Anzeigevorrichtung in wirksamer Verbindung mit dem Steuerungssystem (70), um bei Bestimmung eines Aufpralls durch das Steuerungssystem (70) oder bei manueller Aktivierung einen Alarm vorzusehen.

## Revendications

1. Système de cuirasse pare-balles (10) destiné à être porté par une personne, comprenant:
au moins une section de cuirasse pare-balles (200) ; et
au moins un capteur d'impact (20, 20') associé à au moins une partie de la cuirasse pare-balles (200), le capteur d'impact (20, 20') comprenant :
au moins une première couche conductrice (30, 30') ;
au moins une deuxième couche conductrice (40, 40a') ; et
au moins une couche isolante (60, 60a') entre la première couche conductrice (30, 30') et la deuxième couche conductrice (40, 40a'), la couche isolante (60, 60a') maintenant la première couche conductrice (30, 30') et la deuxième couche conductrice (40, 40a') en une relation espacée, sans contact, la première couche conductrice (30, 30') et la couche isolante (60, 60a') étan déformables lors d'un impact sur la première couche conductrice (30, 30') de telle sorte que la séparation entre la première couche conductrice (30, 30') et la deuxième couche conductrice (40, 40a') diminue lors de l'impact ;
**caractérisé en ce que** le système de cuirasse pare-balles (10) comprend en outre :
une circuiterie connectée au capteur d'impact (20, 20') afin de mesurer un changement d'au moins une propriété électrique du capteur d'impact (20, 20') suite à la diminution de la séparation entre la première couche conductrice (30, 30') et la deuxième couche conductrice (40 , 40a').

2. Système de cuirasse pare-balles (10) selon la revendication 1, dans lequel au moins une partie de la première couche conductrice (30 , 30') fait contact avec la deuxième couche conductrice (40, 40a') lors de l'impact, et dans lequel un courant passe dans au moins une partie de la circuiterie uniquement au contact entre la première couche conductrice (30 , 30') et la deuxième couche conductrice (40, 40a').

3. Système de cuirasse pare-balles (10) selon la revendication 1, dans lequel la circuiterie mesure un changement de capacité du capteur d'impact (20, 20') suite à la diminution de la séparation entre la première couche conductrice (30 , 30') et la deuxième couche conductrice (40, 40a').

4. Système de cuirasse pare-balles (10) selon l'une quelconque des revendications précédentes, dans lequel le capteur d'impact (20, 20') comprend en outre au moins une deuxième couche isolante (60b') et au moins une troisième couche conductrice (40b'), la deuxième couche isolante (60b') étant positionnée entre la troisième couche conductrice (40b') et la deuxième couche conductrice (40a'), la deuxième couche isolante (60b') maintenant la troisième couche conductrice (40b') et la deuxième couche conductrice (40a') en une relation espacée, sans contact, la deuxième couche conductrice (40a') et la deuxième couche isolante (60b') étant déformables lors d'un impact sur le capteur d'impact (20 , 20') de telle sorte que la séparation entre la deuxième couche conductrice (40a') et la troisième couche conductrice (40b') diminue lors de l'impact ; la circuiterie étant adaptée en outre pour mesurer un changement d'au moins une propriété électrique du capteur d'impact (20, 20') suite à la diminution de la séparation entre la deuxième couche conductrice (40a') et la troisième couche conductrice (40b').

5. Système de cuirasse pare-balles (10) selon l'une quelconque des revendications précédentes, comprenant une pluralité de capteurs d'impact (20 , 20') positionnés en matrice.

6. Système de cuirasse pare-balles (10) selon l'une quelconque des revendications précédentes, comprenant :
au moins un système de commande (70) pour contrôler le capteur d'impact et déterminer si un impact s'est produit ; et
au moins un système de communication (80) en connexion opérationnelle avec le système de commande (70), le système de communication (80) comprenant un port de communication connecté de façon à communiquer avec le système de commande qui est adapté pour être connecté à un ordinateur de façon à permettre l'entrée de données de commande.

7. Système de cuirasse pare-balles (10) selon la revendication 6, dans lequel le système de commande (70) comprend un microprocesseur (72).

8. Système de cuirasse pare-balles (10) selon la revendication 6 ou la revendication 7, dans lequel le système de communication (80) comprend une unité de communication (80a) connectée au système de commande (70), l'unité de communication (80a) comprenant un émetteur sans fil pour communiquer avec au moins un autre composant du système de communication positionné à distance de l'unité de communication (80a).

9. Système de cuirasse pare-balles (10) selon la revendication 8, dans lequel le système de communication (80) comporte un téléphone cellulaire ou un module radio positionné à distance de l'unité de communication et comportant un récepteur sans fil pour communiquer avec l'unité de communication.

10. Système de cuirasse pare-balles (10) selon l'une quelconque des revendications 6 à 9, comportant en outre un port de communication connecté de façon à communiquer avec le système de commande (70), le port de communication étant adapté pour être connecté à un ordinateur afin de permettre l'entrée de données de commande.

11. Système de cuirasse pare-balles (10) selon la revendication 10, comprenant en outre un indicateur en connexion opérationnelle avec le système de commande (70) afin de fournir une alarme lors de la détermination par le système de commande (70) d'un impact ou lors d'un actionnement manuel.
